# EUROPÄISCHE PATENTSCHRIFT

(11) **EP 3 375 683 B1**
(45) Veröffentlichungstag und Bekanntmachung des Hinweises auf die Patenterteilung: **09.08.2023**
(21) Anmeldenummer: 18161145.0
(22) Anmeldetag: 12.03.2018
(51) Int. Cl.: B60W 50/00, B60W 30/18

(54) **VERFAHREN ZUR PRÄDIKTION EINER TOPOGRAPHIE-INFORMATION**
METHOD FOR PREDICTING TOPOGRAPHY INFORMATION
PROCÉDÉ DE PRÉDICTION D'UNE INFORMATION TOPOGRAPHIQUE

(30) Priorität: 14.03.2017 DE 102017204239
(43) Veröffentlichungstag der Anmeldung: 19.09.2018
(73) Patentinhaber: Deere & Company, Moline, IL 61265 (US)
(72) Erfinder: Fritz, Norbert, 68163 Mannheim (DE); Baum, Bernd, 68163 Mannheim (DE); Illy, Sebastian, 68163 Mannheim (DE); Flörchinger, Thomas, 68163 Mannheim (DE)
(74) Vertreter: Dehnhardt, Florian Christopher

(56) Entgegenhaltungen:
- DE-A1- 19 544 112
- DE-A1-102015 205 210
- US-B1- 7 272 474
- US-B2- 7 593 798

## Beschreibung

Die Erfindung betrifft ein Verfahren zur Prädiktion einer topographischen Information für ein Fahrzeug, bei dem jeweils mindestens eine Topographie-Information zu unterschiedlichen Fahrpositionen des Fahrzeugs zugeordnet wird, eine zukünftige Fahrposition ermittelt wird, sowie mindestens eine Topographie-Information, welche der ermittelten zukünftigen Fahrposition zugeordnet ist, abgefragt wird.

Für die Steuerung spezifischer Funktionen eines Fahrzeugs kann es von Interesse sein, Informationen über topographische Eigenschaften an unterschiedlichen Fahrpositionen des Fahrzeugs zu ermitteln.

Ein Verfahren der eingangs genannten Art geht beispielweise aus der US 7 272 474 B1 hervor. Bei dem darin beschriebenen Verfahren zum Schätzen der Befahrbarkeit eines Geländes wird zunächst eine aus einer Reihe von Geländezellen bestehende Geländekarte erzeugt, wobei jeder Geländezelle entsprechende Umgebungsdaten zugeordnet sind, die während der Navigation eines Fahrzeugs oder durch eine vorher festgelegte Vermessung des Gebiets (z.B. auf Grundlage von Satellitenbildern, menschlicher Beobachtung oder Aufklärung) gesammelt werden. Die so erzeugte Geländekarte wird anschließend zur Vorhersage von Fahrzeugsteuerdaten für Geländezellen entlang eines geplanten und von dem Fahrzeug zu folgenden Weges herangezogen.

Vergleichbare Verfahren sind ferner aus DE 10 2015 205 210 A1 und US 7 593 798 B2 bekannt.

Es ist daher Aufgabe der vorliegenden Erfindung, eine Prädiktion von topographischen Informationen auf einfache und effiziente Weise zu ermöglichen.

Diese Aufgabe wird gemäß den Merkmalen des Patentanspruchs 1 gelöst.

Das Verfahren gemäß Anspruch 1 ermöglicht eine topographische Erfassung von zukünftigen Fahrpositionen, indem eine Prädiktion einer Topographie-Information im Bereich einer ermittelten zukünftigen Fahrposition eines Fahrzeugs stattfindet. Dabei wird unterschiedlichen Fahrpositionen des Fahrzeugs jeweils mindestens eine Topographie-Information zugeordnet. Sobald eine zukünftige Fahrposition für das Fahrzeug ermittelt wird, kann die dieser zukünftigen Fahrposition bereits zugeordnete Topographie-Information abgefragt werden.

Zur Ermittlung einer zukünftigen Fahrposition bzw. einer sie repräsentierenden zukünftigen Zelle wird - gewissermaßen als Startpunkt - die die aktuelle Fahrposition des Fahrzeugs repräsentierende Zelle und/oder die mit ihr verknüpften Daten herangezogen. Alternativ wird die zukünftige Fahrposition bzw. zukünftige Zelle in Abhängigkeit einer Zelle ermittelt, welche bezüglich der die aktuelle Fahrposition repräsentierenden Zelle benachbart angeordnet ist. Somit kann das Verfahren auch dann sinnvoll durchgeführt werden, wenn für die eine aktuelle Fahrposition repräsentierende Zelle keine oder keine geeigneten Daten vorhanden sein sollten.

Eine Verarbeitung dieser abgefragten und prädizierten Topographie-Information (z.B. Bodenneigung, Rollwiderstands-Koeffizient, Traktions-Koeffizient) kann insbesondere dazu dienen, das Fahrzeug, z.B. dessen Motor, Antriebsstrang oder Antriebsleistung, entsprechend anzusteuern und eine effizientere Antriebsleistung sowie einen reduzierten Kraftstoffverbrauch entlang der Fahrstrecke zu erzielen. Die Ermittlung einer zukünftigen Fahrposition unterstützt dabei die Effizienz des Verfahrens, da eine entsprechende Verarbeitungs- und Steuereinheit dann genügend Zeit hat, den Antrieb des Fahrzeugs für einen definierten zukünftigen Zeitpunkt optimal anzusteuern.

Bei dem Fahrzeug handelt es sich vorzugsweise um ein Nutzfahrzeug, insbesondere eine Baumaschine oder ein landwirtschaftliches Fahrzeug (z.B. Erntemaschine, Mähmaschine, Traktor, Schlepper).

Die Topographie-Information kann grundsätzlich irgendeine topographische Eigenschaft, ein Geländemerkmal oder eine physikalische Größe in einem Bereich einer Fahrposition des Fahrzeugs sein. Die Topographie-Informationen können teilweise oder vollständig durch technische Mittel des Fahrzeugs selbst erfasst und verarbeitet werden (z.B. durch Messen oder Empfangen von Daten an einer Fahrposition) oder durch andere Datenquellen - insbesondere unabhängig von einer bestimmten Fahrposition - zur Verfügung gestellt werden.

Einer bestimmten Fahrposition kann eine einzige Topographie-Information oder auch mehrere Topographie-Informationen zugeordnet werden.

Vorzugsweise wird eine Topographie-Information einer bestimmten Fahrposition zugeordnet, indem eine Anordnung von geographisch unterschiedlichen Zellen bereitgestellt bzw. definiert wird und unterschiedliche Fahrpositionen (z.B. aktuelle und zukünftige Fahrpositionen) durch jeweils eine Zelle repräsentiert werden. Dabei wird die Topographie-Information einer Zelle zugeordnet. Auf diese Weise wird eine informationstechnisch einfache Zuordnung zwischen Topographie-Informationen und Fahrpositionen erzielt.

Die Zelle muss nicht zwangsläufig eine Fläche darstellen. Bei den Zellen kann es sich auch um einzelne Netz- oder Gitterpunkte eines netz- oder gitterartig eingeteilten Koordinatensystems handeln. Vorzugsweise sind die Zellen gemeinsam Bestandteil einer geographischen Fläche. Dabei kann die gewünschte Anordnung von geographischen Zellen mathematisch einfach bereitgestellt werden, indem eine geographische Fläche durch vorbestimmte geographische Längen- und Breitenangaben in definierte Zellen eingeteilt wird. Hierbei ist es für die Durchführung des Verfahrens günstig, eine ohnehin verfügbare oder vom Fahrzeug genutzte satellitengestützte Positionserfassung als Basis für die Definition der Zellen heranzuziehen. Beispielsweise können die von der satellitengestützten Positionserfassung (z.B. GPS, Galileo) verwendeten Breiten- und Längenangaben verwendet oder mit einem definierten Teilungswert entsprechend feiner unterteilt werden, um für das Verfahren geeignete Zellen zu generieren.

Vorteilhaft werden aktuelle Fahrpositionen des Fahrzeugs ebenfalls mittels einer (oder derselben vorgenannten) satellitengestützten Positionserfassung erfasst und datentechnisch zur Durchführung des Verfahrens bereitgestellt.

Weiter bevorzugt werden erfasste aktuelle Fahrpositionen und/oder ermittelte zukünftige Fahrpositionen des Fahrzeugs durch eine Zelle repräsentiert, indem die Positionsdaten oder Positions-Koordinaten der jeweiligen Fahrposition mit entsprechenden Daten von Zellen verglichen werden und auf Basis des Vergleichsergebnisses die korrekte Zelle erkannt wird.

In einer bevorzugten Ausführungsform wird ein Datensatz generiert, welcher mindestens eine Topographie-Information und vorzugsweise noch weitere Informationen bzw. Daten enthält.

Dieser Datensatz wird einer Zelle zugeordnet, so dass auch mindestens eine Topographie-Information einer Zelle zugeordnet wird. Hierdurch lässt sich mit geringem technischen Aufwand eine Topographie-Information abfragen, welche einer ermittelten zukünftigen Fahrposition oder einer ermittelten zukünftigen Zelle zugeordnet ist. Es muss lediglich der Datensatz der ermittelten zukünftigen Zelle bereitgestellt bzw. abgefragt werden.

Wie bereits erwähnt, wird den einzelnen Zellen jeweils ein Datensatz zugeordnet. In einer bevorzugten Ausführungsform wird der Datensatz oder zumindest ein Teil des Inhalts des Datensatzes (z.B. Topographie-Information, Positions-Koordinate) durch technische Mittel des Fahrzeugs selbst generiert, wenn das Fahrzeug die entsprechende Zelle anfährt bzw. überquert oder bereits überquert hat. Im Laufe einer einzelnen Fahrt oder mehrerer Fahrten überquert das Fahrzeug eine zunehmende Anzahl von Zellen und entsprechend werden immer mehr Topographie-Informationen oder Datensätze mit entsprechenden Topographie-Informationen generiert. Dabei können die Datensätze mittels eines entsprechenden Algorithmus und geeigneter Verarbeitungseinheiten automatisch generiert und mit Topographie-Informationen gefüllt werden. Mit zunehmender Anzahl der Zellen mit Topographie-Informationen wird die Datenbasis größer und das Verfahren immer genauer.

Vorzugsweise wird mindestens eine Topographie-Information aktualisiert (z.B. durch Übernahme eines neuen gemessenen Wertes oder durch eine neue Mittelwertbildung), wenn das Fahrzeug die entsprechende Zelle anfährt bzw. überquert oder bereits überquert hat. Dies unterstützt die Aktualität und somit die Genauigkeit der vorhergesagten Topographie-Information an einer ermittelten zukünftigen Fahrposition. Diese Maßnahme ist insbesondere für solche Topographie-Informationen relevant, die sich im Laufe der Zeit verändern, beispielsweise wetterabhängige Rollwiderstands-Koeffizienten oder Traktions-Koeffizienten. Auch andere Daten bzw. Informationsinhalte eines Datensatzes können aktualisiert werden, um die Genauigkeit des Verfahrens zu unterstützen.

Als Topographie-Informationen einer Zelle können beispielsweise eine Bodenneigung und/oder ein Rollwiderstands-Koeffizient und/oder ein Traktions-Koeffizient im Bereich dieser Zelle verwendet werden. Diese Topographie-Informationen können ohne zusätzlichen Aufwand bereitgestellt werden, da sie ohnehin oftmals standardmäßig durch eine entsprechende Elektronik des Fahrzeugs ermittelt und insbesondere an einem elektronischen Bus (z.B. CAN) des Fahrzeugs als Daten für spezifische Steuer- und/oder Regelzwecke zur Verfügung stehen.

Vorzugsweise enthält der Datensatz einer Zelle neben mindestens einer Topographie-Information noch mindestens eine der folgenden Informationen:
- mindestens eine Positions-Koordinate des Fahrzeugs im Bereich dieser Zelle, z.B. eine geographische Breite und/oder geographische Länge und/oder geographische Höhe,
- eine Fahrtrichtung des Fahrzeugs im Bereich dieser Zelle,
- einen Zähler-Status zur Erfassung der Anzahl des bisherigen Hineinfahrens in diese Zelle oder Überquerens dieser Zelle durch das Fahrzeug,
- eine diese Zelle identifizierende Kennung.

Die geographische Breite, Länge und Höhe werden vorteilhaft von einer satellitengestützten Positionserfassung übernommen oder abgeleitet.

Der Zähler zur Erfassung der Anzahl des bisherigen Anfahrens oder Überquerens einer bestimmten Zelle durch das Fahrzeug unterstützt die Ermittlung eines realistischen Mittelwertes verschiedener Topographie-Informationen im Laufe einer wiederholten Arbeitstätigkeit des Fahrzeugs auf derselben Fahrstrecke bzw. in den gleichen Zellen. Außerdem kann mittels des Zählers eine Wahrscheinlichkeitsfunktion für die Ermittlung einer zukünftigen Fahrposition ausgeführt werden. Beispielsweise kann im Falle einer bevorstehenden Kreuzung oder Gabelung anhand der Datensätze der in Frage kommenden Zellen überprüft werden, welche Fahrtrichtung (z.B. rechts, links, geradeaus) nach dieser Kreuzung bzw. Gabelung am häufigsten benutzt wurde, um daraus die wahrscheinlichste zukünftige Fahrposition und entsprechende Zelle zu ermitteln. Aus dem Datensatz dieser Zelle können dann wiederum weitere Topographie-Informationen an der wahrscheinlichsten zukünftigen Fahrposition erfasst werden.

In einer bevorzugten Ausführungsform ist die mindestens eine Topographie-Information oder der Datensatz Bestandteil einer Datenbank, welche am Fahrzeug oder außerhalb des Fahrzeugs angelegt bzw. gespeichert wird. Beispielsweise ist die Datenbank in einer elektronischen Einheit (z.B. Mikrocontroller) des Fahrzeugs angelegt. Alternativ kann die Datenbank in einem externen Datenspeicher (z.B. Datenzentrale eines Fuhrparks, Daten-Cloud, etc.) angelegt sein. Die Datenbank kann Topographie-Informationen und weitere Daten enthalten, welche den interessierenden geographischen Zellen nur des eigenen Fahrzeugs zugeordnet sind. Alternativ kann die Datenbank zusätzlich die Topographie-Informationen und weitere Daten bezüglich anderer Fahrzeuge enthalten. Sofern die Datenbank am Fahrzeug angelegt ist, können die Topographie-Informationen und Datensätze durch technische Funktionen des Fahrzeugs selbst generiert (z.B. während des Überquerens einer Zelle) und in der Datenbank gespeichert werden. Zusätzlich können in der Datenbank Topographie- und Gelände-Informationen abgespeichert sein, welche von anderen Datenquellen geliefert werden.

Vorzugsweise wird die zukünftige Fahrposition in Abhängigkeit von mindestens einer der folgenden Größen ermittelt:
- einer aktuellen Fahrposition des Fahrzeugs
- einer aktuellen Geschwindigkeit des Fahrzeugs,
- einer aktuellen Beschleunigung des Fahrzeugs,
- einer aktuellen Fahrtrichtung des Fahrzeugs,
- einem definierten Prädiktions-Zeitpunkt.

Auch weitere Größen des Fahrzeugs wie ein aktueller Lenkwinkel oder eine aktuelle Gierrate können berücksichtigt werden. Die vorgenannten Größen des Fahrzeugs stehen üblicherweise standardmäßig in der Elektronik des Fahrzeugs zur Verfügung, so dass kein nennenswerter zusätzlicher technischer Aufwand zur Ermittlung der aktuellen Werte dieser Größen erforderlich ist. Der Vorhersage-Zeitpunkt bzw. Prädiktions-Zeitpunkt kann unterschiedlich definiert bzw. programmiert werden, je nachdem, wieviel Zeitvorlauf eine geeignete Verarbeitung der vorhergesagten Topographie-Information für spezifische Steuerungs- und/oder Regelungszwecke am Fahrzeug, insbesondere an dessen Antrieb, benötigt.

In einer bevorzugten Ausführungsform wird nicht nur der Datensatz bzw. dessen Topographie-Information(en) der ermittelten zukünftigen Fahrposition oder ermittelten zukünftigen Zelle abgefragt. Vielmehr wird zusätzlich noch der Datensatz bzw. dessen Topographie-Information(en) mindestens einer benachbarten Zelle abgefragt. Auf diese Weise kann das Verfahren auch sinnvoll durchgeführt werden für den Fall, dass der ermittelten zukünftigen Fahrposition oder ermittelten zukünftigen Zelle noch kein Datensatz oder brauchbarer Wert einer Topographie-Information zugeordnet worden ist. Es wird dann erforderlichenfalls eine Topographie-Information einer benachbarten Zelle verarbeitet und folglich ein größerer Toleranzbereich bei der Vorhersage einer Topographie-Information an einer ermittelten zukünftigen Fahrposition bzw. zukünftigen Zelle in Kauf genommen.

Vorzugsweise wird eine Anordnung von Zellen entlang einer Fahrroute bzw. Fahrtrichtung des Fahrzeugs als eine ZellenSequenz registriert, z.B. in einer Datenbank abgespeichert. Hierdurch kann eine bereits absolvierte Fahrstrecke auf der Basis von aufeinanderfolgenden Zellen registriert oder abgespeichert werden. Eine registrierte Zellen-Sequenz, d.h. eine bereits absolvierte Fahrroute des Fahrzeugs, kann dann als Grundlage für die Ermittlung der zukünftigen Fahrposition bzw. zukünftigen Zelle dienen. Je nach Art der Ermittlung kann dabei der Inhalt der zugehörigen Datensätze abgefragt oder ausgewertet werden.

Die Zellen-Sequenz kann mit Zellen einer aktuell zu absolvierenden Fahrroute des Fahrzeugs verglichen werden. Dieser Vergleich unterstützt die Ermittlung der zukünftigen Fahrposition insbesondere bei speziellen Fahrsituationen. Beispielsweise kann dann mit einer höheren Wahrscheinlichkeit die korrekte zukünftige Fahrposition ermittelt werden, wenn die zukünftige Fahrposition nach einer Weggabelung oder nach einer Kreuzung angesiedelt ist.

In einer bevorzugten Ausführungsform enthält eine Zellen-Sequenz eine Kombination von zwei Zellen, nämlich eine sogenannte Startzelle und eine entlang der Fahrroute folgende Zielzelle. Diese beiden Zellen können über ein Verknüpfungsmerkmal miteinander verknüpft werden, z.B. durch einen Übergangszähler, dessen Zähler-Status signalisiert, ob oder wie oft in der Vergangenheit ein Übergang des Fahrzeugs von der Startzelle zu der Zielzelle stattgefunden hat. Nach einer Fahrt oder mehreren Fahrten durch das Fahrzeug ist eine Vielzahl dieser Zellen-Sequenzen, d.h. miteinander verknüpfter Start- und Zielzellen registriert. Anhand der Verknüpfungen kann dann mit geringem Datenverarbeitungsaufwand diejenige Zelle ermittelt werden, welche die zukünftige Fahrposition repräsentiert. Dies erlaubt insbesondere auch ein einfaches Ermitteln einer zukünftigen Fahrposition nach einer Weggabelung oder nach einer Kreuzung.

Das erfindungsgemäße Verfahren wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine schematische Anordnung mit Komponenten zur Durchführung des Verfahrens,
- Fig. 2: eine schematische Darstellung einer geographischen Fläche als ein Koordinatennetz mit einer Vielzahl von Netz-Zellen und einem Fahrzeug während der Aufnahme von einzelnen Netz-Zellen zugeordneten Daten,
- Fig. 3: eine schematische Darstellung des Inhalts einer Datenbank, in denen einzelnen Netz-Zellen zugeordnete Daten und ggf. weitere Daten abgespeichert ist, und
- Fig. 4-9: jeweils eine schematische geographische Fläche mit dem Fahrzeug während unterschiedlicher Prädiktions-Situationen.

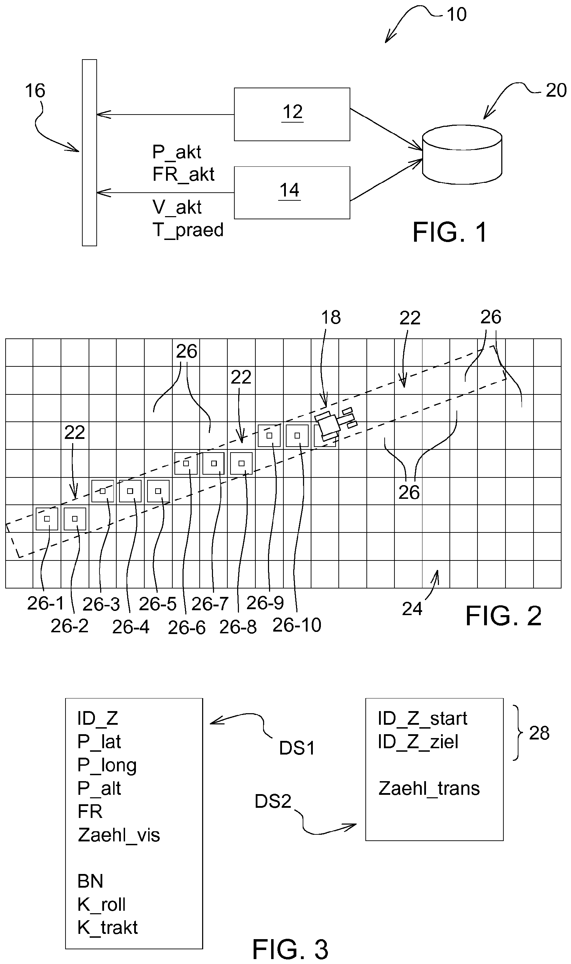

Fig. 1 zeigt schematisch wesentliche Komponenten einer Anordnung 10 zur Durchführung des Prädiktions-Verfahrens. Die Anordnung umfasst u.a. eine Kartographie-Einheit 12 und eine Prädiktions-Einheit 14. Sowohl die Kartographie-Einheit 12 als auch die Prädiktions-Einheit 14 kann auf einen Steuer- und/oder Datenbus 16 (z.B. CAN-Bus) eines Fahrzeugs 18 zugreifen. Dabei lesen die Kartographie-Einheit 12 und die Prädiktions-Einheit 14 die für sie jeweils relevanten Daten.

Beispielsweise erfasst die Kartographie-Einheit 12 über den Bus 16 aktuelle Positionsdaten bzw. Positions-Koordinaten des Fahrzeugs 18 und ordnet sie bestimmten noch zu beschreibenden Zellen zu. Außerdem erhält die Kartographie-Einheit 12 über den Bus 16 aktuelle topographische Informationen bzw. Daten über das Gelände im Bereich einer aktuellen Fahrposition des Fahrzeugs 18. Die topographischen Informationen sind beispielsweise eine Bodenneigung BN, ein Rollwiderstands-Koeffizient K_roll und ein Traktions-Koeffizient K_trakt. Diese Daten und weitere relevante Daten werden über technische Mittel (z.B. Sensorik, Empfangseinheit für eine satellitengestützte Positionserfassung) des Fahrzeugs am Bus 16 zur Verfügung gestellt. Die Kartographie-Einheit 12 schreibt die empfangenen Daten ggf. in weiter verarbeiteter Form in einen Datenspeicher bzw. eine Datenbank 20 ein. Je nach Ausführungsform kann die Datenbank 20 fahrzeugintern oder extern angeordnet sein. Vorzugsweise kann die Kartographie-Einheit 12 einzelne Daten in der Datenbank 20 überschreiben. Beispielsweise werden einzelne Daten durch neue Messwerte oder durch eine neue Mittelwertbildung aktualisiert.

Die Prädiktions-Einheit 14 erfasst über den Bus 16 relevante Daten für die Ermittlung einer zukünftigen Fahrposition des Fahrzeugs 18 bzw. für die Ermittlung einer diese zukünftige Fahrposition repräsentierenden Zelle. Relevante Daten können beispielsweise eine aktuelle Fahrposition P_akt des Fahrzeugs 18, eine aktuelle Geschwindigkeit v_akt des Fahrzeugs 18, eine aktuelle Beschleunigung des Fahrzeugs 18 und eine aktuelle Fahrtrichtung FR_akt des Fahrzeugs 18 sein. Außerdem wird ein definierter Prädiktions-Zeitpunkt T_praed berücksichtigt, der am Bus 16 zur Verfügung steht oder direkt an der Prädiktions-Einheit 14 programmiert werden kann. Um eine Topographie-Information prädizieren zu können, verarbeitet die Prädiktions-Einheit 14 vom Bus 16 empfangene und aus der Datenbank 20 gelesene Daten. Die prädizierten Topographie-Informationen können dazu dienen, eine in einem zukünftigen Zeitpunkt benötigte Antriebsleistung des Fahrzeugs 18 zu prädizieren und entsprechend zu steuern. Hierzu können die prädizierten Topographie-Informationen von der Prädiktions-Einheit 14 beispielsweise an den Bus 16 ausgegeben werden oder direkt an eine Steuerung des Antriebsstranges oder eine Motorsteuerung gesendet werden.

Das Verfahren geht von der Überlegung aus, dass viele Fahrrouten bzw. Fahrstrecken, insbesondere bei Baumaschinen oder landwirtschaftlichen Fahrzeugen, sich in ähnlicher oder identischer Weise wiederholen. Dies können z.B. sich wiederholende Transportfahrten auf denselben Fahrstrecken oder eine wiederkehrende landwirtschaftliche Bearbeitung auf denselben Feldern sein. Eine oder mehrere Fahrten des Fahrzeugs können deshalb zunächst dazu genutzt werden, in einer Art Kartographie-Phase mittels der Kartographie-Einheit 12 Daten zu sammeln und als Datenbasis für die spätere Prädiktion in der Datenbank 20 abzuspeichern. Alternativ kann die Prädiktions-Funktion bereits dann aktiv sein, wenn die Kartographie-Funktion startet. Allerdings sind dann zunächst keine Topographie-Informationen prädizierbar, da die Kartographie-Funktion noch nicht die erforderliche Datenbasis geschaffen hat.

In Fig. 2 befindet sich das Fahrzeug 18 in einer Kartographie-Phase. Mit anderen Worten absolviert das Fahrzeug 18 eine Fahrstrecke bzw. Fahrroute 22, während der die Kartographie-Einheit 12, wie bereits erwähnt, Daten empfangen und in der Datenbank 20 abspeichern kann. Das Fahrzeug 18 überquert dabei eine geographische Fläche 24, welche in eine Vielzahl geographisch unterschiedlicher Zellen 26 eingeteilt ist. Auch wenn die einzelnen Zellen 26 in den Ausführungsbeispielen etwa quadratisch dargestellt sind, können sie abhängig von dem definierten geographischen Koordinatennetz eine unterschiedliche geographische Länge und Breite abdecken. Das jeweilige Koordinatennetz wird vorzugsweise durch die Kartographie-Einheit 12 festgelegt.

In Fig. 2 hat das Fahrzeug 18 entlang der Fahrroute 22 bereits die mit einem zentralen Punkt markierten Zellen 26-1, 26-2, 26-3, 26-4, 26-5, 26-6, 26-7, 26-8, 26-9 und 26-10 überquert. Vorzugsweise erfolgt eine Aufnahme und Abspeicherung von Daten durch die Kartographie-Einheit 12 in einem festgelegten Zeittakt (z.B. einmal je Sekunde). Bei einer entsprechend angepassten aktuellen Geschwindigkeit v_akt des Fahrzeugs 18 können dann für jede überquerte Zelle 26-1 bis 26-10 Daten, insbesondere Topographie-Informationen, generiert und in der Datenbank 20 abgespeichert werden. Auf diese Weise kann ein Datensatz DS1 mit mehreren Daten bzw. Informationen generiert werden, welcher einer überquerten Zelle 26 zugeordnet wird.

In Fig. 3 ist ein Datensatz DS1 mit einem beispielhaften Dateninhalt dargestellt. Der Datensatz DS1 ist über eine Identifikations-Kennung ID_Z einer bestimmten Zelle 26 zugeordnet. Positions-Koordinaten P_lat (geographische Breite), P_long (geographische Länge) und P_alt (geographische Höhe) zeigen die Position des Fahrzeugs 18 an, an der bestimmte Topographie-Informationen innerhalb der jeweiligen Zelle erfasst wurden. Als Topographie-Informationen werden beispielsweise eine Bodenneigung BN, ein Rollwiderstands-Koeffizient K_roll und ein Traktions-Koeffizient K_trakt erfasst. Außerdem wird eine bei der erfassten Fahrposition des Fahrzeugs 18 vorliegende Fahrtrichtung FR des Fahrzeugs 18 bzw. der Richtungsvektor erfasst. Die vorgenannten Daten bzw. Informationen des Datensatzes DS1 können bei einem erneuten Überqueren derselben Zelle 26 aktualisiert werden. Beispielsweise kann ein alter Wert durch einen neu erfassten Wert ersetzt werden oder alte Werte können zusammen mit einem neu erfassten Wert zu einer aktualisierten Mittelwertbildung herangezogen werden. Weiterhin enthält der Datensatz DS1 einen Zähler Zaehl_vis zur Erfassung der Anzahl des bisherigen Überquerens derselben Zelle 26 durch das Fahrzeug 18. Auf diese Weise wird für eine Vielzahl überquerter Zellen 26 jeweils ein Datensatz DS1 generiert. Über die Identifikations-Kennung ID_Z ist der Datensatz DS1 einer Zelle 26 eindeutig zugeordnet, so dass auch die Werte der Topographie-Informationen einer Zelle 26 zugeordnet sind.

Optional wird noch ein weiterer Datensatz DS2 generiert, dessen Dateninhalt in einer noch zu beschreibenden bevorzugten Ausführungsform das Ermitteln einer zukünftigen Fahrposition bzw. das Ermitteln der entsprechenden zukünftigen Zelle 26 unterstützt. Dabei entspricht die Bezeichnung ID_Z_start der Identifikations-Kennung ID_Z einer Zelle 26, die bezüglich der absolvierten Fahrroute 22 als eine Startzelle bezeichnet wird, während die Bezeichnung ID_Z_ziel der Identifikations-Kennung ID_Z einer Zelle 26 entspricht, die bezüglich der Fahrroute 22 als eine Zielzelle bezeichnet wird. Gemäß Fig. 2 stellt z.B. die Zelle 26-1 eine Startzelle dar, während die Zelle 26-2 eine Zielzelle ist. Die Zelle 26-2 wiederum ist bezüglich der Zelle 26-3 eine Startzelle usw. Diese Anordnungen können als jeweils zwei Zellen 26 enthaltende Zellen-Sequenzen 28 bezeichnet werden. Beide Zellen ID_Z_start und ID_Z_ziel sind durch einen Zähler Zaehl_trans miteinander verknüpft. Dieser Zähler kann signalisieren, ob und ggf. wie oft in der Vergangenheit ein Übergang des Fahrzeugs 18 von derselben Startzelle zu derselben Zielzelle stattgefunden hat.

Die einzelnen Datensätze DS1 je Zelle 26 werden hinsichtlich ihrer Datenstruktur in einer bevorzugten Ausführungsform bereits dann generiert, wenn die Fläche 24 in Zellen 26 eingeteilt wird. Alternativ wird ein Datensatz DS1 erst dann generiert und einer Zelle 26 zugeordnet, wenn diese Zelle 26 vom Fahrzeug 18 überquert wird oder wurde. Im letzteren Fall können sämtlichen Größen des Datensatzes DS1 bereits bei Generieren des Datensatzes DS1 reale Werte (z.B. Messwerte) zugeordnet werden. Wegen der Vielzahl theoretischer Kombinationsmöglichkeiten zweier Zellen 26 innerhalb der Fläche 24 wird der Datensatz DS2 vorzugsweise erst dann generiert, wenn innerhalb der Fläche 24 ein Übergang des Fahrzeugs 18 zwischen zwei Zellen 26 stattgefunden hat.

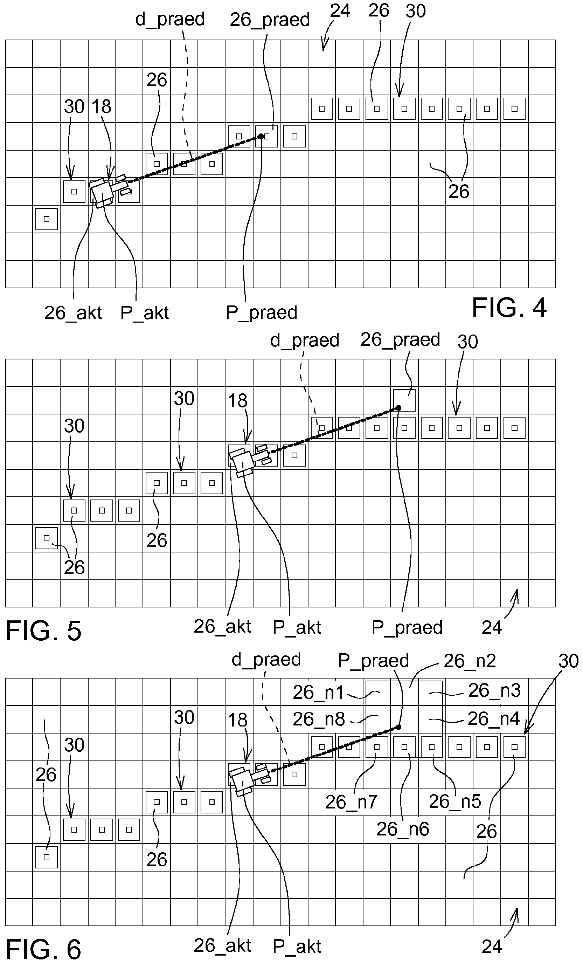

In Fig. 4 wird eine Prädiktions-Funktion ausgeführt. In der Fläche 24 sind sequentiell angeordnete Zellen 26 jeweils mit einem zentralen Punkt markiert. Sie bilden einen Bestandteil einer abschnittsweise dargestellten Zellen-Sequenz 30. Diese Zellen 26 sind bereits von dem Fahrzeug 18 bei einer oder mehrerer früheren Fahrrouten überquert. Dementsprechend sind diesen Zellen 26 bereits Topographie-Informationen zugeordnet. Das Fahrzeug 18 befindet sich in einer aktuellen Fahrposition P_akt innerhalb einer Zelle 26. Ausgehend von der aktuellen Fahrposition P_akt bzw. von der sie repräsentierenden aktuellen Zelle 26_akt und in Abhängigkeit von weiteren Größen kann eine zukünftige Fahrposition P_praed bzw. eine sie repräsentierende zukünftige Zelle 26_praed ermittelt werden. Diese Größen beinhalten vorzugsweise eine aktuelle Fahrtrichtung FR_akt bzw. dessen Richtungsvektor und eine aktuelle Geschwindigkeit v_akt des Fahrzeugs 18 sowie einen definierten Prädiktionszeitpunkt T_praed. Hierzu kann die Prädiktions-Einheit 14 die Werte der vorgenannten Größen über den Bus 16 (wie in Fig. 1 angedeutet) oder über eine andere Datenschnittstelle empfangen. Die Prädiktions-Einheit 14 verarbeitet die empfangenen Daten beispielsweise mittels eines geeigneten Algorithmus und ermittelt die zukünftige Zelle 26_praed bzw. die zukünftige Fahrposition P_praed. Zu diesem Zweck berechnet bzw. schätzt die Prädiktions-Einheit 14 vorzugsweise auch eine Prädiktions-Distanz d_praed, welche in Fig. 4 als gestrichelte Linie zwischen der aktuellen Fahrposition P_akt und der zukünftigen Fahrposition P_praed angedeutet ist. Aus dem der ermittelten Zelle 26_praed zugeordneten Datensatz DS1 wird dann mindestens eine der vorhandenen Topographie-Informationen abgefragt und folglich diese Topographie-Information(en) prädiziert.

Fig. 5 zeigt eine weitere Prädiktions-Situation. Analog zu Fig. 4 wird für das Fahrzeug 5 eine zukünftige Fahrposition P_praed bzw. eine diese repräsentierende zukünftige Zelle 26_praed ermittelt. Beim Abfragen des Datensatzes DS1 bzw. der Topographie-Information(en) dieser zukünftigen Zelle 26_praed wird jedoch festgestellt, dass dieser Zelle 26_praed noch keine Topographie-Information oder kein brauchbarer Wert einer Topographie-Information zugeordnet worden ist. Im vorliegenden Fall liegt dies daran, dass diese ermittelte zukünftige Zelle 26_praed außerhalb der Zellen-Sequenz 30 liegt und deshalb diese Zelle 26_praed noch nicht mit Topographie-Informationen in oben beschriebener Weise kartographiert wurde.

Das anhand von Fig. 5 geschilderte Problem kann dadurch gelöst werden, indem zusätzlich eine Umfeldsuche in einem Feld mit einer definierten Anzahl von Zellen 26 (bei der Ausführungsform gemäß Fig. 6: drei mal drei Zellen 26) durchgeführt wird, um eine brauchbare Topographie-Information zu finden. In Fig. 6 werden also Topographie-Informationen von maximal acht benachbarten Zellen 26_n1, 26_n2, 26_n3, 26_n4, 26_n5, 26_n6, 26_n7 und 26_n8 abgefragt. Mittels einer geeigneten Datenverarbeitung wird dabei festgestellt, dass die Zelle 26_n6 die beste Annäherung an die ermittelte zukünftige Zelle 26_praed ist. Für die Prädiktion einer Topographie-Information wird folglich die Zelle 26_n6 ausgewählt.

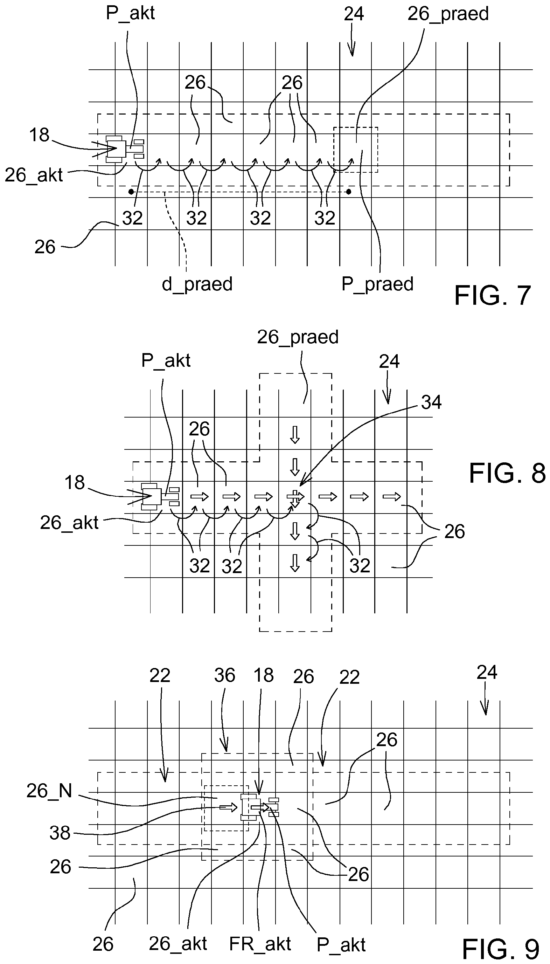

In Fig. 7 wird die Prädiktions-Distanz d_praed wiederum ausgehend von der aktuellen Fahrposition P_akt des Fahrzeugs 18 und in Abhängigkeit weiterer Größen wie aktueller Fahrgeschwindigkeit v_akt und definiertem Prädiktions-Zeitpunkt T_praed berechnet bzw. geschätzt. Zur Ermittlung der zukünftigen Zelle 26_praed wird ein bei einer früheren Fahrroute bereits erfolgter Übergang 32 zwischen aufeinanderfolgenden Zellen 26 berücksichtigt. Dieser Übergang 32 bildet ein Verknüpfungsmerkmal zwischen aufeinanderfolgenden Zellen 26 und wird durch den Datensatz DS2 bzw. den Zähler Zaehl_trans repräsentiert. Ausgehend von der die aktuelle Fahrposition P_akt repräsentierenden aktuellen Zelle 26_akt werden mittels der bekannten Übergänge die miteinander verknüpften Zellen 26 verfolgt, bis die aufsummierte Distanz zwischen den Zellen 26 mindestens gleich groß der Prädiktions-Distanz ist. Die letzte Zelle 26 in dieser Aufsummierung entspricht der zu ermittelnden zukünftigen Zelle 26_praed bzw. sie repräsentiert die zu ermittelnde zukünftige Fahrposition P_praed.

Bei einer weiteren Prädiktions-Situation gemäß Fig. 8 befindet sich die aktuelle Fahrposition P_akt des Fahrzeugs 18 vor einer Kreuzung 34. Aufgrund der berechneten oder abgeschätzten Prädiktions-Distanz d_praed muss sich die zukünftige Fahrposition P_praed bzw. zukünftige Zelle 26_praed grundsätzlich nach der Kreuzung 34 befinden. Für die Ermittlung der zukünftigen Fahrposition P_praed bzw. zukünftigen Zelle 26_praed mit der größten Wahrscheinlichkeit können wieder die anhand von Fig. 7 bereits erläuterten Übergänge 32 zwischen aufeinanderfolgenden Zellen 26 herangezogen werden.

In Fig. 9 ist der aktuellen Zelle 26_akt, in der sich das Fahrzeug 18 befindet, bisher kein Datensatz DS1 und/oder Datensatz DS2 zugeordnet worden. Dies ist beispielsweise dann der Fall, wenn das Fahrzeug 18 in einer vorherigen Kartographie-Phase dieselbe Fahrroute 22 im Bereich der aktuellen Zelle 26_akt mit einer höheren Geschwindigkeit durchfahren hat. Die Ermittlung einer zukünftigen Fahrposition P_praed bzw. zukünftigen Zelle 26_praed kann deshalb nicht in Abhängigkeit von der aktuellen Zelle 26_akt erfolgen. Es wird deshalb eine andere Zelle 26 gesucht, welche der Ausgangspunkt für die Ermittlung einer zukünftigen Fahrposition P_praed bzw. zukünftigen Zelle 26_praed sein soll. Hierzu wird um das Fahrzeug 18 herum eine Umfeldsuche in einem Feld 36 mit einer definierten Anzahl von Zellen 26 (bei der Ausführungsform gemäß Fig. 9: drei mal drei Zellen 26) durchgeführt. Mittels einer geeigneten Datenverarbeitung wird dabei festgestellt, dass der Zelle 26_N ein Datensatz DS1 und ggf. auch ein Datensatz DS2 zugeordnet ist, wobei die im Datensatz DS1 abgespeicherte Fahrtrichtung FR bzw. deren Richtungsvektor 38 auch mit der aktuellen Fahrtrichtung FR_akt des Fahrzeugs 18 übereinstimmt. Die Zelle 26_N ist bezüglich der aktuellen Zelle 26_akt benachbart angeordnet und befindet sich entlang der aktuellen Fahrtrichtung FR_akt betrachtet unmittelbar hinter der aktuellen Zelle 26_akt. Unter Berücksichtigung einer entsprechenden Korrektur der Prädiktions-Distanz d_praed kann dann eine zukünftige Zelle 26_praed beispielsweise wie anhand von Fig. 7 erläutert ermittelt werden.

## Patentansprüche

1. Verfahren zur Prädiktion einer Topographie-Information (BN, K_roll, K_tract) für ein Fahrzeug (18), mit folgenden Verfahrensschritten:
- Zuordnen jeweils mindestens einer Topographie-Information (BN, K_roll, K_tract) zu unterschiedlichen Fahrpositionen (P_akt, P_praed) des Fahrzeugs (18),
- Ermitteln einer zukünftigen Fahrposition (P_praed),
- Abfragen mindestens einer Topographie-Information (BN, K_roll, K_tract), welche der ermittelten zukünftigen Fahrposition (P_praed) zugeordnet ist, **dadurch gekennzeichnet, dass** die zukünftige Fahrposition (P_praed)
- in Abhängigkeit einer die aktuelle Fahrposition (P_akt) des Fahrzeugs (18) repräsentierenden Zelle (26_akt) ermittelt wird, oder
- in Abhängigkeit einer Zelle (26_N) ermittelt wird, welche bezüglich der die aktuelle Fahrposition (P_akt) des Fahrzeugs (18) repräsentierenden Zelle (26_akt) benachbart angeordnet ist.

2. Verfahren nach Anspruch 1, **dadurch gekennzeichnet, dass** mindestens eine Topographie-Information (BN, K_roll, K_tract) einer Fahrposition (P_akt, P_praed) zugeordnet wird, indem
- eine Anordnung von geographisch unterschiedlichen Zellen (26) definiert wird, wobei eine Fahrposition (P_akt, P_praed) des Fahrzeugs (18) durch eine Zelle (26, 26_akt, 26_praed) repräsentiert wird, und
- einer Zelle (26) mindestens eine Topographie-Information (BN, K_roll, K_tract) zugeordnet wird.

3. Verfahren nach Anspruch 2, **dadurch gekennzeichnet, dass** ein Datensatz (DS1) generiert wird, welcher mindestens eine Topographie-Information (BN, K_roll, K_tract) enthält und einer Zelle (26) zugeordnet wird.

4. Verfahren nach Anspruch 2 oder 3, **dadurch gekennzeichnet, dass** mindestens eine einer Zelle (26) zugeordnete Topographie-Information (BN, K_roll, K_tract) während oder nach dem Überqueren dieser Zelle (26) durch das Fahrzeug (18) generiert wird.

5. Verfahren nach Anspruch 4, **dadurch gekennzeichnet, dass** während oder nach dem erneuten Überqueren einer Zelle (26) durch das Fahrzeug (18) mindestens eine dieser Zelle (26) zugeordnete Topographie-Information (BN, K_roll, K_tract) aktualisiert wird.

6. Verfahren nach einem der vorhergehenden Ansprüche,
**dadurch gekennzeichnet, dass** mindestens eine der folgenden Größen als Topographie-Information vorgesehen ist:
- eine Bodenneigung (BN),
- ein Rollwiderstands-Koeffizient (K_roll),
- ein Traktions-Koeffizient (K_tract).

7. Verfahren nach einem der Ansprüche 3 bis 6, **dadurch gekennzeichnet, dass** der Datensatz (DS1) einer Zelle (26) mindestens eine der folgenden Informationen enthält:
- mindestens eine Positions-Koordinate (Pos_lat, Pos_long, Pos_alt),
- eine Fahrtrichtung (FR) des Fahrzeugs (18),
- einen Zähler (Zaehl_vis) zur Erfassung der Anzahl des bisherigen Überquerens dieser Zelle (26) durch das Fahrzeug (18),
- eine diese Zelle (26) identifizierende Kennung (ID _Z).

8. Verfahren nach einem der Ansprüche 3 bis 7, **dadurch gekennzeichnet, dass** der Datensatz (DS1) Bestandteil einer Datenbank (20) ist, welche am Fahrzeug (18) oder außerhalb des Fahrzeugs (18) angelegt wird.

9. Verfahren nach einem der vorhergehenden Ansprüche, **dadurch gekennzeichnet, dass** die zukünftige Fahrposition (P_praed) in Abhängigkeit von mindestens einer der folgenden Größen ermittelt wird:
- einer aktuellen Fahrposition (P_akt) des Fahrzeugs,
- einer Geschwindigkeit (v_akt) des Fahrzeugs,
- einer Fahrtrichtung (FR_akt) des Fahrzeugs,
- einem definierten Prädiktions-Zeitpunkt (T_praed).

10. Verfahren nach einem der Ansprüche 4 bis 9, **dadurch gekennzeichnet, dass**
- mindestens eine Topographie-Information (BN, K_roll, K_tract) einer ermittelten zukünftigen Zelle (26_praed) abgefragt wird, und
- zusätzlich mindestens eine Topographie-Information (BN, K_roll, K_tract) einer benachbarten Zelle (26_n1 - 26_n8) abgefragt wird.

11. Verfahren nach einem der Ansprüche 2 bis 10, **dadurch gekennzeichnet, dass** eine Anordnung von Zellen (26) entlang einer Fahrroute (22) des Fahrzeugs (18) als eine Zellen-Sequenz (28, 30) registriert wird.

12. Verfahren nach Anspruch 11, **dadurch gekennzeichnet, dass**
- die Zellen-Sequenz (28) eine Startzelle (ID_Z_start) und eine entlang der Fahrroute (22) folgende Zielzelle (ID_Z_ziel) als zwei Zellen (26) enthält, und
- die beiden Zellen (26) durch ein Verknüpfungsmerkmal (Zaehl_trans) miteinander verknüpft werden, wobei das Verknüpfungsmerkmal (Zaehl_trans) einen Übergang (32) des Fahrzeugs (18) von der Startzelle (ID_Z_start) zu der Zielzelle (ID _Z_ziel) entlang der Fahrroute (22) repräsentiert.

13. Verfahren nach einem der vorhergehenden Ansprüche, **dadurch gekennzeichnet, dass** eine Antriebsleistung des Fahrzeugs (18) in Abhängigkeit der prädizierten Topographie-Information (BN, K_roll, K_tract) gesteuert wird.

## Claims

1. Method for predicting topography information (BN, K_roll, K_tract) for a vehicle (18), having the following method steps:
- assigning in each case at least one item of topography information (BN, K_roll, K_tract) to different driving positions (P_akt, P_praed) of the vehicle (18),
- determining a future driving position (P_praed),
- querying at least one item of topography information (BN, K_roll, K_tract) assigned to the determined future driving position (P_praed), **characterized in that** the future driving position (P_praed) is determined
- on the basis of a cell (26_akt) representing the current driving position (P_akt) of the vehicle (18), or
- on the basis of a cell (26_N) arranged adjacent to the cell (26_akt) representing the current driving position (P_akt) of the vehicle (18).

2. Method according to Claim 1, **characterized in that** at least one item of topography information (BN, K_roll, K_tract) is assigned to a driving position (P_akt, P_praed) by
- defining an arrangement of geographically different cells (26), wherein a driving position (P_akt, P_praed) of the vehicle (18) is represented by a cell (26, 26_akt, 26_praed), and
- assigning at least one item of topography information (BN, K_roll, K_tract) to a cell (26).

3. Method according to Claim 2, **characterized in that** a data record (DS1) is generated, which data record contains at least one item of topography information (BN, K_roll, K_tract) and is assigned to a cell (26).

4. Method according to Claim 2 or 3, **characterized in that** at least one item of topography information (BN, K_roll, K_tract) assigned to a cell (26) is generated while or after the vehicle (18) crosses this cell (26).

5. Method according to Claim 4, **characterized in that**, while or after the vehicle (18) crosses a cell (26) again, at least one item of topography information (BN, K_roll, K_tract) assigned to this cell (26) is updated.

6. Method according to one of the preceding claims, **characterized in that** at least one of the following variables is provided as topography information:
- a ground inclination (BN),
- a rolling resistance coefficient (K_roll),
- a traction coefficient (K_tract).

7. Method according to one of Claims 3 to 6, **characterized in that** the data record (DS1) for a cell (26) contains at least one of the following items of information:
- at least one position coordinate (Pos_lat, Pos_long, Pos_alt),
- a direction of travel (FR) of the vehicle (18),
- a counter (Zaehl_vis) for capturing the number of times the vehicle (18) has previously crossed this cell (26),
- an identifier (ID _Z) identifying this cell (26).

8. Method according to one of Claims 3 to 7, **characterized in that** the data record (DS1) is part of a database (20) created in the vehicle (18) or outside the vehicle (18).

9. Method according to one of the preceding claims, **characterized in that** the future driving position (P_praed) is determined on the basis of at least one of the following variables:
- a current driving position (P_akt) of the vehicle,
- a speed (v_akt) of the vehicle,
- a direction of travel (FR_akt) of the vehicle,
- a defined prediction time (T_praed).

10. Method according to one of Claims 4 to 9, **characterized in that**
- at least one item of topography information (BN, K_roll, K_tract) for a determined future cell (26_praed) is queried, and
- at least one item of topography information (BN, K_roll, K_tract) for an adjacent cell (26_n1-26_n8) is additionally queried.

11. Method according to one of Claims 2 to 10, **characterized in that** an arrangement of cells (26) along a route (22) of the vehicle (18) is registered as a cell sequence (28, 30).

12. Method according to Claim 11, **characterized in that**
- the cell sequence (28) contains a starting cell (ID_Z_start) and a target cell (ID_Z_ziel), following along the route (22), as two cells (26), and
- the two cells (26) are linked to one another by means of a linking feature (Zaehl_trans), wherein the linking feature (Zaehl_trans) represents a transition (32) of the vehicle (18) from the starting cell (ID_Z_start) to the target cell (ID_Z_ziel) along the route (22).

13. Method according to one of the preceding claims, **characterized in that** a drive power of the vehicle (18) is controlled on the basis of the predicted topography information (BN, K_roll, K_tract).

## Revendications

1. Procédé de prédiction d'une information topographique (BN, K_roll, K_tract) pour un véhicule (18), comprenant les étapes de procédé suivantes :
- associer respectivement au moins une information topographique (BN, K_roll, K_tract) à différentes positions de conduite (P_akt, P_praed) du véhicule (18),
- déterminer une position de déplacement future (P_praed),
- demander au moins une information topographique (BN, K_roll, K_tract) qui est associée à la position de déplacement future déterminée (P_praed), **caractérisé en ce que** la position de déplacement future (P_praed)
- est déterminée en fonction d'une cellule (26_akt) représentant la position de déplacement actuelle (P_akt) du véhicule (18), ou bien
- est déterminée en fonction d'une cellule (26_N) qui est agencée de manière adjacente à la cellule (26_akt) représentant la position de déplacement actuelle (P_akt) du véhicule (18).

2. Procédé selon la revendication 1, **caractérisé en ce qu'**au moins une information topographique (BN, K_roll, K_tract) est associée à une position de déplacement (P_akt, P_praed), par
- définition d'un agencement de cellules (26) géographiquement différentes, une position de déplacement (P_akt, P_praed) du véhicule (18) étant représentée par une cellule (26, 26_akt, 26_praed), et
- association à une cellule (26) d'au moins une information topographique (BN, K_roll, K_tract).

3. Procédé selon la revendication 2, **caractérisé en ce qu'**un jeu de données (DS1) contenant au moins une information topographique (BN, K_roll, K_tract) est généré et associé à une cellule (26).

4. Procédé selon la revendication 2 ou 3, **caractérisé en ce qu'**au moins une information topographique (BN, K_roll, K_tract) associée à une cellule (26) est générée pendant ou après le franchissement de cette cellule (26) par le véhicule (18).

5. Procédé selon la revendication 4, **caractérisé en ce que** pendant ou après le nouveau franchissement d'une cellule (26) par le véhicule (18), au moins une information topographique (BN, K_roll, K_tract) associée à cette cellule (26) est mise à jour.

6. Procédé selon l'une des revendications précédentes, **caractérisé en ce qu'**au moins l'une des grandeurs suivantes est prévue en tant qu'information topographique :
- une pente du sol (BN),
- un coefficient de résistance au roulement (K_roll),
- un coefficient de traction (K_tract).

7. Procédé selon l'une des revendications 3 à 6, **caractérisé en ce que** le jeu de données (DS1) d'une cellule (26) contient au moins l'une des informations suivantes :
- au moins une coordonnée de position (Pos_lat, Pos_long, Pos_alt),
- une direction de déplacement (FR) du véhicule (18),
- un compteur (Zaehl_vis) pour détecter le nombre de fois où le véhicule (18) a franchi ladite cellule (26) jusqu'à présent,
- un identifiant (ID_Z) identifiant ladite cellule (26).

8. Procédé selon l'une des revendications 3 à 7, **caractérisé en ce que** le jeu de données (DS1) fait partie d'une base de données (20) qui est créée sur le véhicule (18) ou en dehors du véhicule (18).

9. Procédé selon l'une des revendications précédentes, **caractérisé en ce que** la position de déplacement future (P_praed) est déterminée en fonction d'au moins l'une des grandeurs suivantes :
- une position de déplacement actuelle (P_akt) du véhicule,
- une vitesse (v_akt) du véhicule,
- une direction de déplacement (FR_akt) du véhicule,
- un instant de prédiction défini (T_praed).

10. Procédé selon l'une des revendications 4 à 9, **caractérisé en ce que**
- au moins une information topographique (BN, K_roll, K_tract) d'une future cellule déterminée (26_praed) est demandée, et
- au moins une information topographique (BN, K_roll, K_tract) d'une cellule voisine (26_n1 - 26_n8) est en outre demandée.

11. Procédé selon l'une des revendications 2 à 10, **caractérisé en ce qu'**un agencement de cellules (26) le long d'un trajet (22) du véhicule (18) est enregistré sous la forme d'une séquence de cellules (28, 30).

12. Procédé selon la revendication 11, **caractérisé en ce que**
- la séquence de cellules (28) comprend une cellule de départ (ID_Z_start) et une cellule de destination suivante (ID _Z_ziel) le long de l'itinéraire (22) sous la forme de deux cellules (26), et
- les deux cellules (26) sont reliées entre elles par une caractéristique de liaison (Zaehl_trans), la caractéristique de liaison (Zaehl_trans) représentant une transition (32) du véhicule (18) de la cellule de départ (ID _Z_start) à la cellule de destination (ID _Z_ziel) le long de l'itinéraire (22).

13. Procédé selon l'une des revendications précédentes, **caractérisé en ce qu'**une puissance motrice du véhicule (18) est commandée en fonction de l'information topographique prédite (BN, K_roll, K_tract).
